# EUROPEAN PATENT SPECIFICATION

(11) **EP 1 520 190 B1**
(45) Date of publication and mention of the grant of the patent: **17.01.2007**
(21) Application number: 02740954.9
(22) Date of filing: 10.07.2002
(51) Int. Cl.: G02B 5/18, G03H 1/26

(54) **OPTICALLY VARIABLE SECURITY DEVICE**
OPTISCH VARIABLE SICHERHEITSVORRICHTUNG
DISPOSITIF DE SECURITE A VARIABILITE OPTIQUE

(43) Date of publication of application: 06.04.2005
(73) Proprietor: De La Rue International Limited, Basingstoke, Hampshire RG22 4BS (GB)
(72) Inventor: HOLMES, Brian William, Fleet, Hants GU51 5HZ (GB); DRINKWATER, Kenneth John, Richmond, Surrey TW10 7NJ (GB)
(74) Representative: Skone James, Robert Edmund
(86) International application number: PCT/GB2002/003174
(87) International publication number: WO 2004/008193

(56) References cited:
- EP-A- 0 105 099
- EP-A- 0 375 833
- WO-A-94/24615

## Description

Security documents such as banknotes now frequently carry optically variable devices (OVDs) such as diffraction gratings or holographic optical microstructures as a security feature against copy and counterfeit. This has been motivated by the progress in the fields of computer based desktop publishing and scanning which renders conventional security print technologies such as intaglio and offset printing increasingly susceptible to counterfeit. A particularly good way to strengthen security documents against counterfeit is to combine security print with optically variable diffractive devices whose structures are non-copiable by scanners and which can exhibit optically variable effects such as colour changes by diffraction, apparent runs, kinetic movement effects, animation and distinct switches between images. A particularly advantageous effect is where the OVD produces a movement effect. Such effects are both pleasing to the eye and easily understood by the viewer and as a consequence enhance the security of the device.

Several such classes of diffractive based security devices exist.

There are two distinct approaches to producing a diffractive OVD. The first approach is focused on producing complex 2D surface diffraction gratings. Typically these approaches are provided by E-beam e.g. Exelgram^{™}, Dot Matrix and its variants e.g. Aegis, or specialised proprietary techniques such as those used to produce the Kinegram^{™}. The "Exelgram^{™}" was developed by CSIRO (Commonwealth Scientific and Industrial Research Organisation), Australia and the Kinegram^{™} was developed by Landis and Gyr, Switzerland. These are described in WO-A-93/18419, WO-A-95/04948 and WO-A-95/02200 for the Exelgram^{™} and US-A-4761253 and EP-A-0105099 for the Kinegram^{™}. Both of these techniques use directly written localised surface diffraction gratings, which in the case of the Exelgram^{™} is by an electron beam direct write process and in the case of a Kinegram^{™} is by the recombining step and repeat process outlined in US-A-4761253.

Both of these techniques enable one precise diffraction grating to be written into a particular area. In the case of WO-A-95/02200, a device is disclosed displaying two angularly separated but overlapping diffracted images made from two completely overlapping diffraction grating areas while WO-A-95/04948 details a diffraction grating device made from a series of tracks of diffraction grating structures that exhibits a clearly switching image where the separate images can occupy overlapping areas. Both of these devices have been used for applications on security documents such as banknotes. In both examples such switching effects, if incorporated into the design in the appropriate manner, can give rise to movement effects.

The second approach to producing OVDs is based around what is more conventionally referred to as the holographic process which inherently involves the interference of two coherent light beams, one of which is modified by or carries information relating to an object e.g. object beam. Examples of this approach are the conventional Benton H1/H2 transfer techniques e.g. rainbow holography or the sophisticated masking techniques used to produce 2D-diffractive images such as the Alphagram^{™}, Moviegram^{™}, the latter is sometimes referred to as interferential lithography.

The first approach, as described earlier, which we shall refer to as digital exposure techniques, is inherently suited to producing animation or kinetic movement effects e.g. expanding line patterns and linear graphical movement patterns. These movement or animation effects are intended, from a security point of view, to substitute for the inability of digital exposure techniques to create 3D depth effects. Such 3D depth effects are characteristic of holographic processes used to produce conventional holograms.

A particularly secure form of animation is that in which the movement of the light pattern on the surface of the device appears essentially continuous. Now given that the direction of diffraction/redirection experienced by a light ray incident upon a point on the surface of a security device is defined by the pitch and groove orientation of the grating microstructure at that point, it therefore follows that the generation of said continuously moving light pattern requires a special grating distribution within the region defined by the light pattern which varies continuously (or near continuously) in pitch and orientation. Such a continuously varying spatial grating distribution is known within the parlance of optoelectronics as a "chirped" grating distribution. It must also be appreciated that if the chirped grating distribution acts as to predominantly diffract or redirect light of a particular wavelength or colour when generating the moving light pattern then the grating distribution will vary predominantly in the orientation rather than the pitch (or its inverse, spatial frequency used defined in terms of lines per mm).

In extremis, for this case of a movement locus of essentially single colour, the grating distribution may contain no spatial variation in pitch/spatial frequency. Conversely if the grating distribution acts also to create a light pattern which exhibits a progressive colour change as it evolves then the grating distribution will have a spatial variation which is predominantly due to progressive changes in grating pitch, and in extremis may contain no variation in the grating orientation.

In respect of the digital exposure methods those that utilise a vector phase writing or exposure process are to be preferred i.e. Kinegram^{™}. The current invention is concern with an improved method for producing continuous movement effects using the conventional H1/H2 holographic process, thus enabling the holographer to combine the security benefits of kinetic movement effects with the 3D parallax effects that are ordinarily available using this technique.

It is known that it is possible to create simple movement and animation effects with the combination of multiple artwork masks and a corresponding number of exposures of each artwork mask into an intermediate silver halide H1. However if the movement sequence contains, for example, a dozen distinct graphical elements the application of this process becomes very time consuming.

In accordance with a first aspect of the present invention, a method of recording an optically variable security device comprises exposing an object to a coherent beam of diffuse light; causing the resultant light to interfere with a reference beam and recording the resultant interference pattern on or in a record medium characterised in that an aperture mask is located upstream or downstream of the object with respect to the direction of the diffuse light beam such that different parts of the object are imaged on to respective different, non-overlapping parts of the record medium.

The current invention seeks to overcome the problems set out above and further provides two essential benefits.
1. To allow the holographer to produce holographic movement sequences in one or two exposures rather than multiple exposures as described in the method above.
2. To produce diffractive movement effects that are completely continuous. That is the grating structure does not discretely change between any two neighbouring points on the movement locus. This aspect is not achievable using any of the previously described approaches including the separate artwork mask and repeated exposure techniques.

Some examples of optically variable security devices and methods for their manufacture in accordance with the invention will now be described and contrasted with known examples with reference to the accompanying drawings, in which:
Figure 1 is a schematic side view showing the conventional origination of a H1 recording;
Figures 2 and 3 are schematic side views showing some steps in the conventional origination of a moving image H1;
Figure 4 is a schematic, enlarged view showing diffraction grating lines in a H1 constructed according to Figures 2 and 3;
Figure 5 illustrates the origination of a H1 according to a first example of the invention;
Figure 6 is a view similar to Figure 4 but illustrating grating lines on a H1 manufactured in accordance with Figure 5;
Figure 7 illustrates in perspective view the Figure 5 example in more detail;
Figure 8 illustrates an example of artwork;
Figure 9 illustrates another example of artwork for creating a movement effect;
Figures 10 and 11 are schematic views of another conventional origination process;
Figure 12 is a view similar to Figure 5 but illustrating another method according to the invention;
Figure 13 is a perspective view of an example according to the Figure 12 arrangement;
Figure 14 is a view similar to Figure 5 but illustrating a third example of the invention;
Figure 15 illustrates two of the components used in accordance with a further example of the invention for originating multiple images;
Figure 16 illustrates an arrangement similar to that shown in Figure 5 but for producing a colour variation in the H1;
Figure 17 illustrates an arrangement similar to that shown in Figure 16 but for obtaining both a colour variation and movement effect;
Figure 18 is a view similar to Figure 12 but with a pin hole aperture;
Figures 19 and 20 illustrate conventional arrangements for recording H1 and H2 holograms; and,
Figures 21 and 22 illustrate arrangements for recording an H2 hologram for the first and second examples of the invention respectively.

Before considering the detailed construction of such a device it is pertinent to consider the Benton Rainbow H1/H2 recording and transfer process, beyond this brief introduction further detail can be found in "Practical Holography" by G. Saxby.

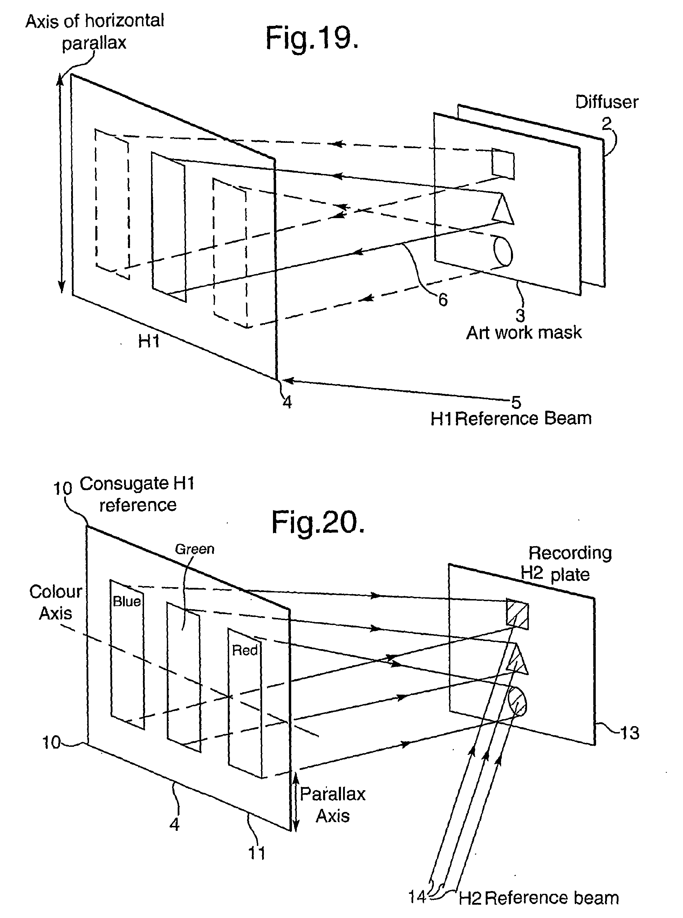

Shown in Figure 19 is a typical Benton H1 4 recording arrangement wherein we see that the H1 4 is configured, following interference between an object beam 6 and a reference beam 5, into a number of narrow elongated strips or slits with a component of the overall object (which is in this case defined by the combination of a glass transmission mask 3 and diffuser 2) recorded into each strip. The H1 4 is therefore in effect a composite of elemental holograms defined by each strip or slit. These strips or slits are conventionally elongated along a direction or axis corresponding to the horizontal or left-to-right axis of the object or artwork.

The relative motion of different parts of a 3-dimensional object as an observer changes his viewing perspective or angle in the horizontal (left- to-right) plane is known as parallax. Hence in a Benton H1 the slits are elongated along the horizontal parallax axis. The elemental hologram strips or slits, which we find convenient to refer to as Benton Slits are restricted to be narrow in the object or artwork vertical axis thus sacrificing vertical parallax. This loss of vertical parallax is compensated by that fact this elemental Benton slit hologram during the subsequent transfer stage will record a component of the resulting H2 image which replays a near pure Rainbow colour under white light illumination.

Let us consider the transfer process in more detail with reference to Figure 20. Here we see that when the H1 4 is illuminated with a coherent laser beam 10, which is the conjugate of that used to record it, each Benton strip will reconstruct a real image of the object component previously recorded into it. The object components replayed by each Benton slit are allowed to simultaneously or sequentially interfere with a second reference beam 14, from the same laser source, usually referred to as the H2 reference beam, the resultant interference patterns can then be recorded into a suitable photosensitive material such as photoresist.

It should be appreciated that the component rays emanating from each Benton slit make or form a different angle with the reference beam and thus record an interference beam and hence microstructure of a different pitch or spatial frequency. The larger the inter-beam angle the higher the spatial frequency (e.g. smaller the groove spacing or pitch) of the interference pattern/microstructure. Hence each Benton slit will also, in addition to providing horizontal parallax, provide an image component within the H2 which when illuminated by white light will reply a particular Rainbow colour into the observers eye, which differs form that provided by the other Benton slits present.

In Figure 20 each Benton slit is labelled with the relative Rainbow colour it will provide at the desired viewing angle. Since colour is encoded within the H1 along a dimension which is orthogonal to the parallax axis we find it convenient to define a colour axis, shown as a dashed line. Generally the H2 reference beam 14 and colour or dispersion axis form a plane that is orthogonal to the parallax axis and therefore the Benton slits. This plane is often referred to as the principle plane of dispersion and in the Benton Rainbow Hologram (H2) the Rainbow spectrum is distributed or dispersed along the plane of dispersion.

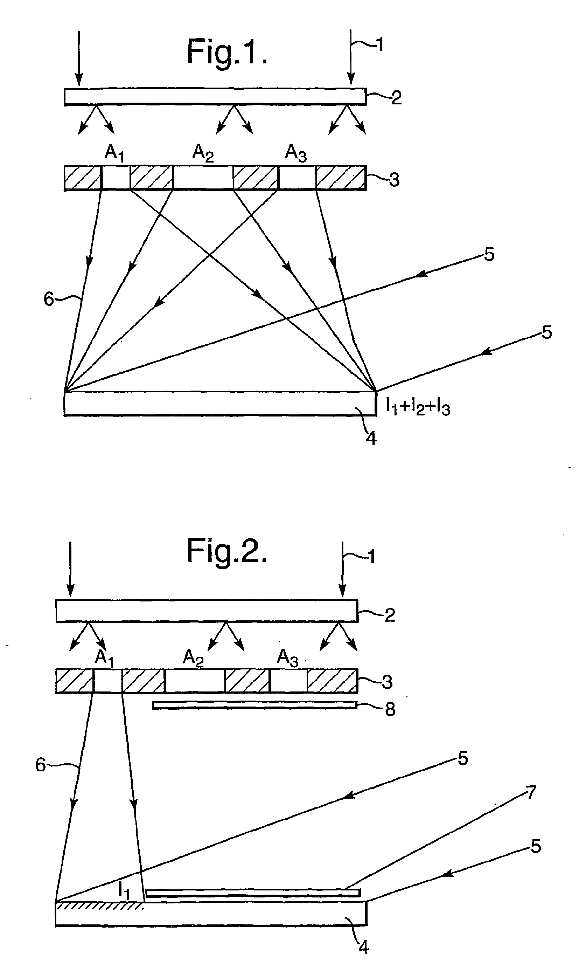

So far we have inferred that the Benton slits are orientated to capture horizontal depth related to parallax effects. However the Benton slits may be used to record graphical movement or animation effects (e.g. stereograms are a refined example) by subdividing the slit into regions, with each region recording a particular graphical component of the movement sequence. We illustrate the principles of this recording process by reference to Figure 1.

Figure 1 illustrates the generation of a H1 master as known to those skilled in the art. Coherent laser light 1 is shone through a diffuser 2 onto an artwork mask 3 to form a coherent object beam 6. It will be appreciated by someone skilled in the art that the artwork mask may be replaced by an object or model. In this instance the artwork mask comprises three image elements A₁, A₂, and A₃. The object beam 6 then combines with a coherent reference beam 5, which we hereto refer to as the H1 reference beam, on the surface of an H1 4 to generate the holographic image. In this instance the H1 4 is exposed over the full surface by all the three image elements.

The H1 4 is then illuminated by a beam of light which is a conjugate of the H1 recording beam thus reconstructing a real holographic image in space. A second beam of non-diffuse coherent light, which is generally provided in the form of a simple collimated or spherical wave front and is known in the art as the H2 recording reference beam is allowed to interfere with the holographic image provided by the H1. A recording medium (typically photoresist) is then placed in the region where the holographic image provided by the H1 overlap and thus interfere. The holographic interference pattern is thus recorded into the photosensitive material to create what is known in the art as the H2 hologram.

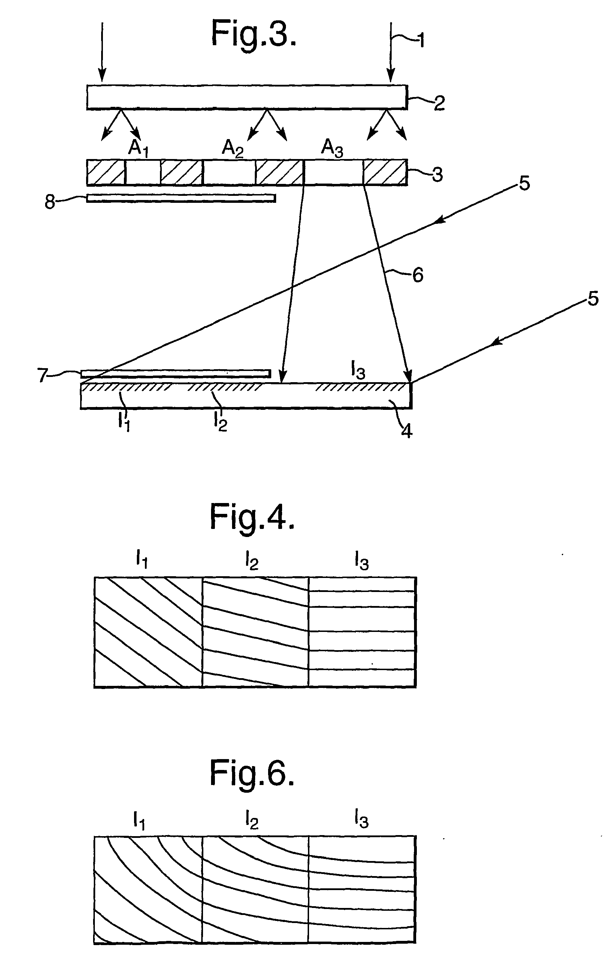

In the Figure 1 example all the image elements are to replay simultaneously so as to be viewed together at any point within the holograms horizontal viewing angle. If, however, a movement effect is to be created, the image elements should not replay simultaneously but in sequence with variation of viewing angle. The current state of the art to achieve a movement effect is illustrated in Figures 2 and 3. The process is essentially the same as described above but two additional fully opaque masks are introduced. The first image mask 8 hides two of the image elements in the artwork mask thus only allowing light to pass through the third. A second H1 mask 7 is also introduced to prevent the H1 4 from being exposed across the full surface. Figure 2 shows this arrangement with the image mask obscuring A₂ and A₃ and allowing only light to pass through A₁. The H1 mask 7 obscures the majority of the H1 4 consequently I₁ is imaged in only a localised area. Once the holographer has exposed I₁ he must then proceed to expose the remaining two image elements in sequence. To do this the image mask and the H1 mask are both moved, firstly to leave only A₂ and the central area of H1 exposed and finally to leave A₃ and the right hand portion of H1 exposed (as shown in Figure 3). Once the three exposures have been completed the H1 can be transferred to the H2 in the normal manner (not shown). The resultant holographic device will have three discrete elements that replay at three discrete viewing angles. As the viewing angle changes the image will appear to flip between the three image elements to create a psuedo movement effect. To improve the effect or produce a more complex animation more image elements must be introduced. Essentially the greater the number of image elements the smoother and more realistic the movement or animation effect. Unfortunately the number of image elements that can be included is restricted due to the time required to expose each individual element. The current invention allows all the image elements to be exposed simultaneously as in Figure 1 but still enables a movement effect to be created.

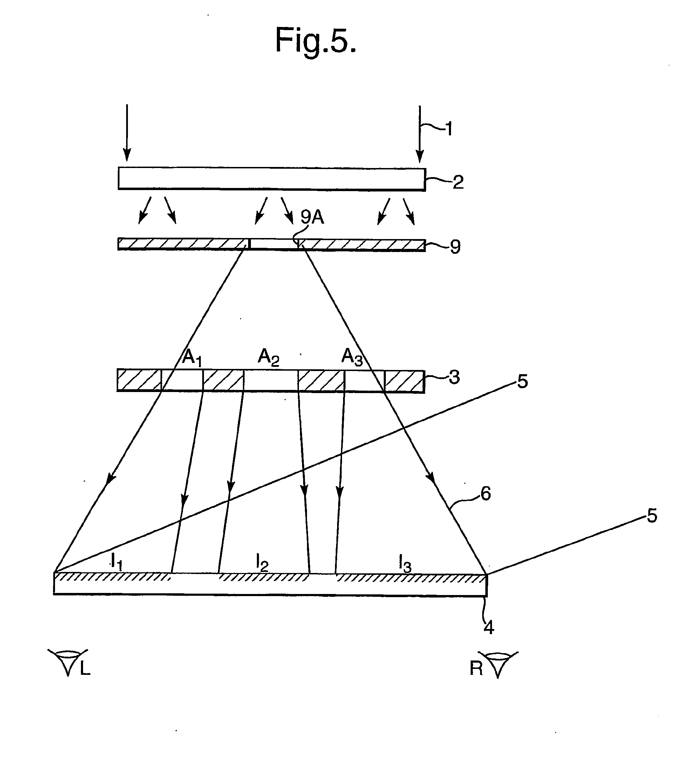

Figure 5 illustrates in plan view a first embodiment of the current invention. The method retains all the essential features shown in Figure 1 but rather than use a masking approach as described above an aperture or slit 9A in an aperture mask 9 is introduced between the diffuser 2 and the artwork mask 3. By restricting the light, the H1 4 is imaged in localised regions rather than across the full surface as illustrated in Figure 1. Also because none of the image elements of the H1 4 is masked, the whole device can be imaged in a single exposure. The method can be easily understood by considering a viewer looking through the back of point L in the Benton slit. The viewer will only be able to see the aperture 9A and therefore the light source by viewing through A₁. If a viewer at point L looks through A₂ he will not be able to see the aperture 9A and likewise viewing through A₃ no aperture can be seen. The only point the viewer can see the aperture through an image element at point L is by viewing through A₁. It must therefore follow that light passing through the aperture 9A and A₁ can only expose the H1 in the region I₁. Likewise light passing through A₂ will expose region I₂ and so on for each image element in the artwork mask. Figure 5 shows a very simple example with the exposure of three discrete non-abutting elements. When the device is viewed the viewer will see three discrete elements at three discrete viewing angles as before. Thus as the device is viewed from different angles a movement effect will be observed. A H2 is then prepared from the H1 as before.

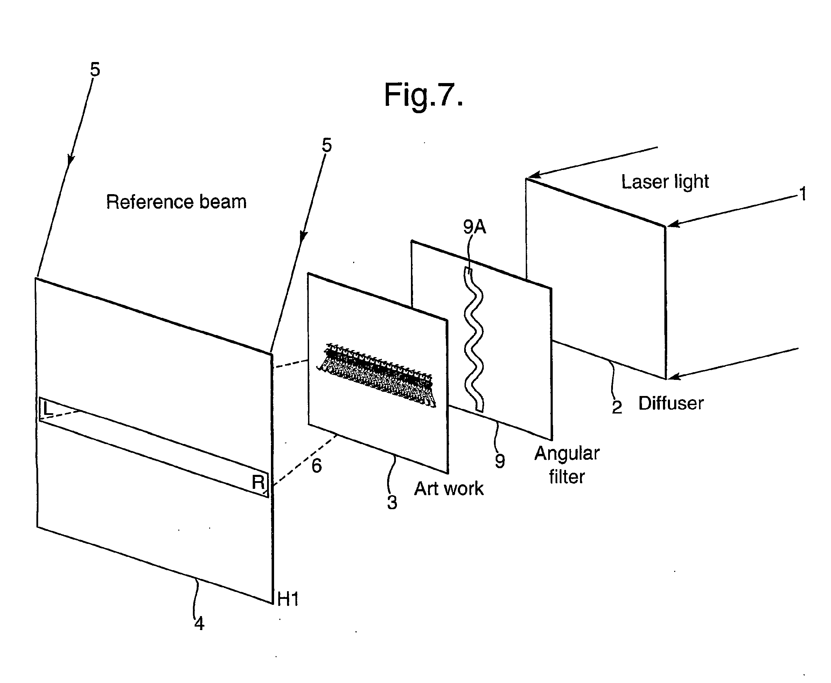

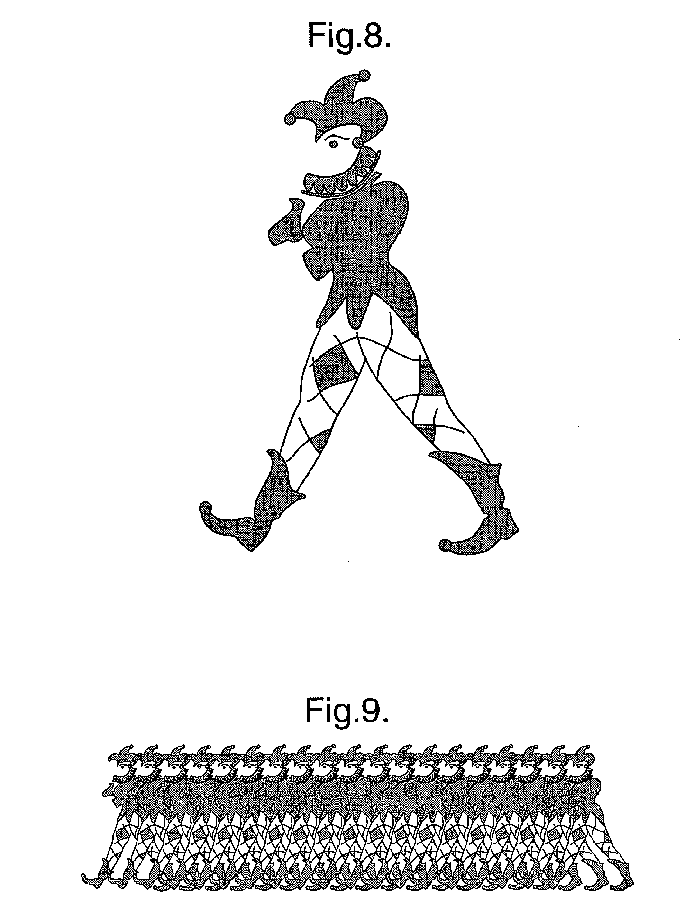

An example of artwork that might be used is shown in Figure 8. More complex and continuous movement effects may be generated by repeating the single element shown in Figure 8 numerous times. This is illustrated in Figure 9, where a number of figures are placed in a line overlapping each other. The use of this artwork mask in the current invention is illustrated in Figure 7. When exposed using the inventive method, this artwork will produce an image with a smooth continuous movement as the viewing angle changes. This smooth movement cannot be achieved using any other current approach.

Figures 4 and 6 illustrate why the current invention provides a smooth continuous movement. Figure 4 shows a device comprising three image elements produced according to the prior art methods described previously. For the sake of clarity the diffraction gratings defining the image element have been magnified. In Figure 4 the three image elements can be seen to be clearly discrete with the diffraction gratings going through a clear step change in orientation for each element. The current invention would provide a device as shown in Figure 6. As a single exposure is used the variation in angle of the diffraction grating changes smoothly with no discrete step changes. The examples above are non-limiting and those skilled in the art will recognise the potential this approach has for producing a wide range of complex movement and animation effects.

The example above will generate an image that moves as the viewing angle changes, indeed the image will appear to move in the same direction as the change in viewing angle.

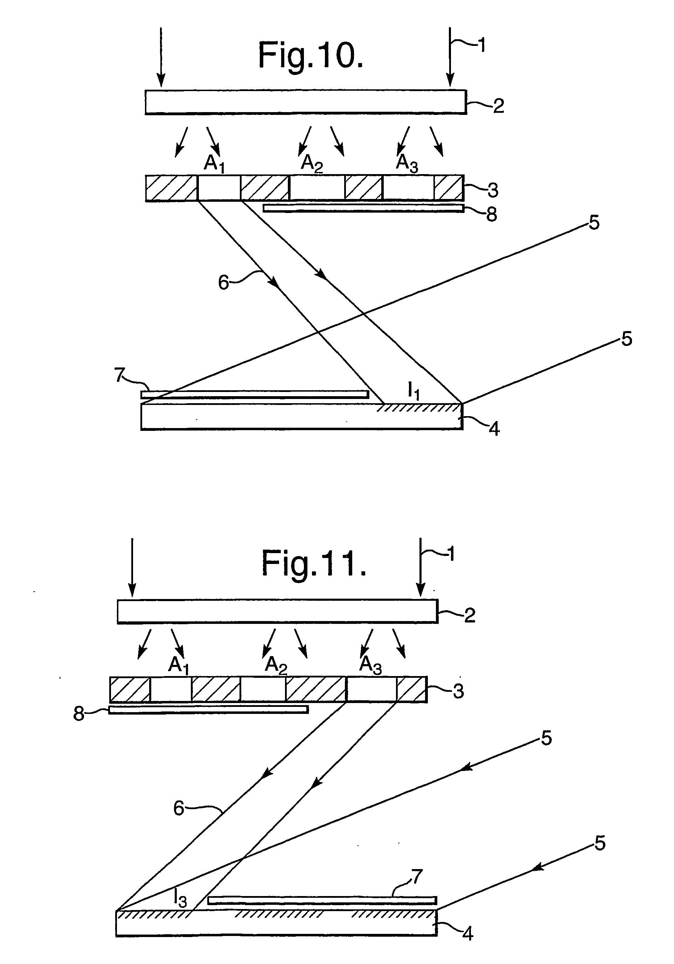

It is also possible to use the current invention to make an image move in the opposite direction to the change in viewing angle. Figures 10 and 11 illustrate how this was achieved previously. The principle is similar to that illustrated in Figures 2 and 3. In Figure 10 an image mask 8 is used to obscure image elements A₂ and A₃ and only allow light to pass through A₁. In order to create an opposing direction of motion to viewing angle, the image is reversed on the H1 and this is achieved by masking the H1 in the manner shown in Figure 10. The H1 mask 7 obscures the majority of the H1 4 leaving only the right hand side exposed. As a result A₁ is only imaged in the region I₁. As before the image mask 8 and the H1 mask 7 are both moved and second and finally third exposures made. Figure 11 illustrates the arrangement for the third and final exposure. As before this approach is time consuming and the effects possible limited as a result.

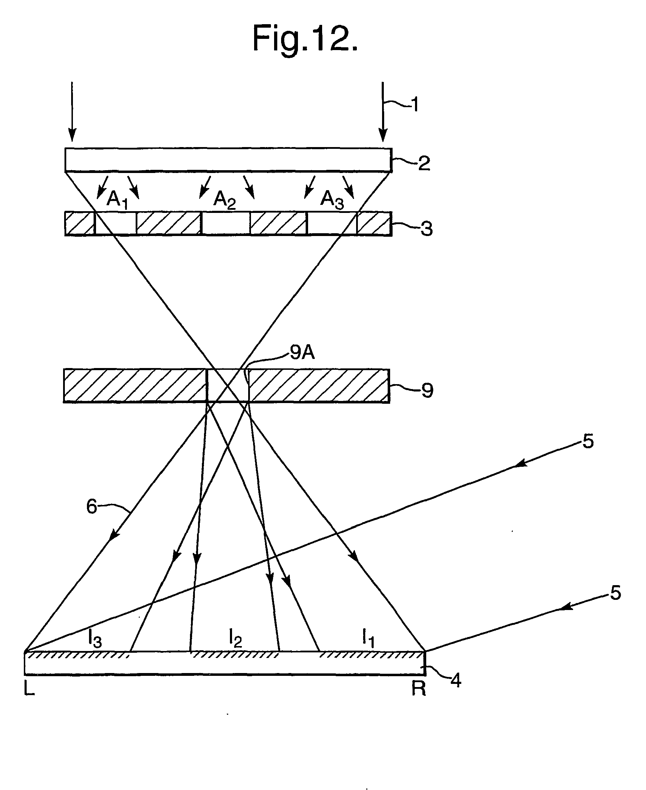

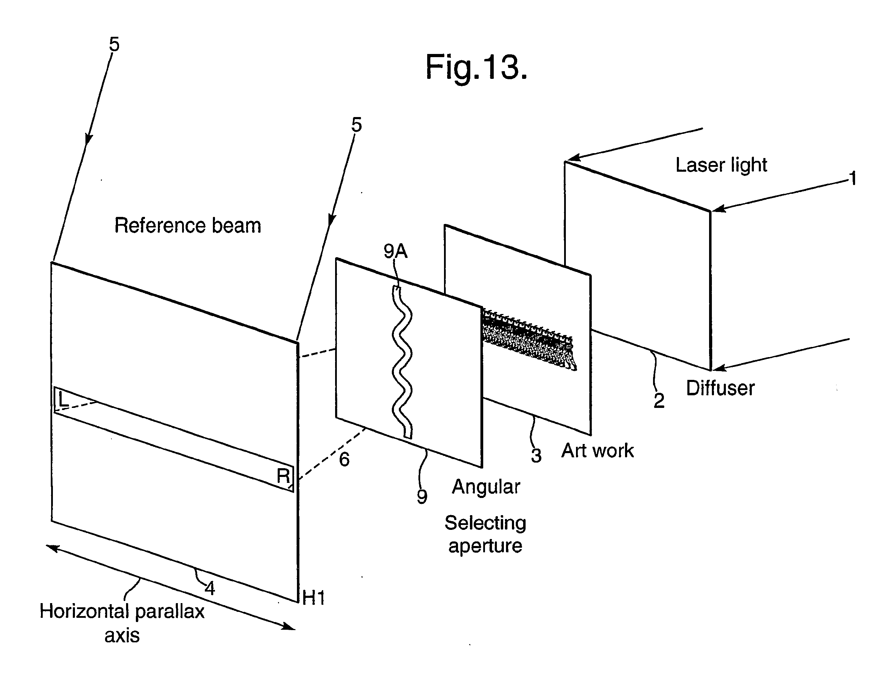

A second embodiment of the invention overcomes the problem of multiple exposures and again relies upon the inclusion of an aperture. Figures 12 and 13 show a plan view and a side view of the second embodiment of the current invention respectively. Here the aperture 9A is introduced between the artwork mask 3 and the H1 4. Again the same principle as described for the first embodiment applies. At any one point on the H1 4 only those portions of the artwork mask 3 viewable through the aperture 9A will be imaged. That is A₃ is only viewable from the point labelled L on the H1, consequently only the region I₃ will be imaged with the artwork portion labelled A₃. As with Figures 10 and 11 the resultant H1 image is reversed to that of the artwork mask and as a result the motion effect will oppose the change in viewing angle.

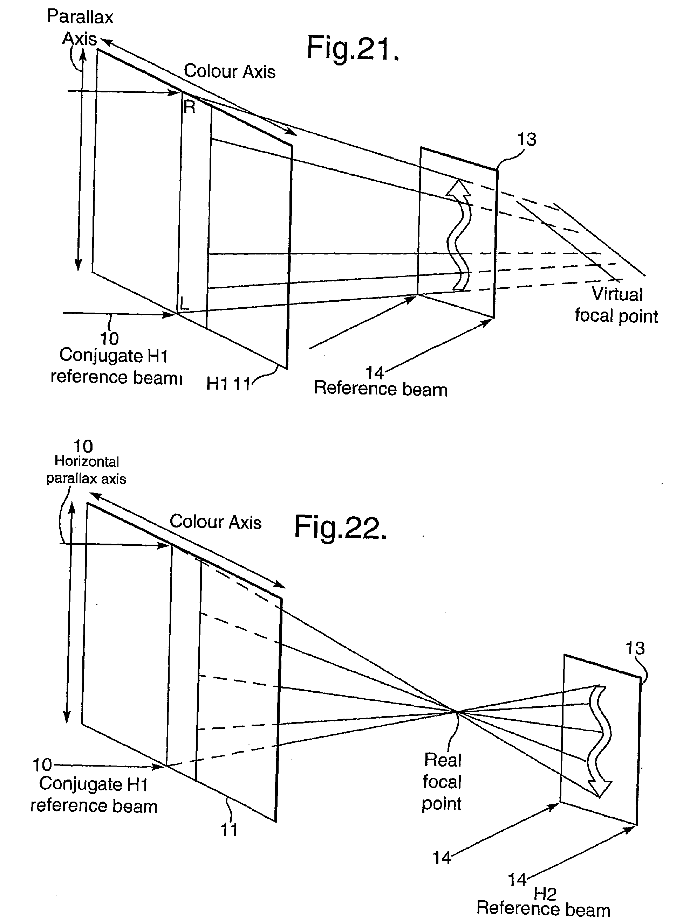

So far we have only concerned ourselves with the H1 generation process. However it is generally envisaged that this invention can be provided within the media of an embossed hologram or optically variable device (OVD) and therefore it is necessary to consider the H2 generation process. This involves illuminating the H1 containing, in addition to conventional artwork/object recordings, at least one of the previous embodiments. Figures 21 and 22 show the transfer geometry pertaining to embodiment 1 and embodiment 2 respectively. These arrangements are similar to that shown in Figure 20 and will not be described in further detail.

An alternative approach is to encode a number of H1 intermediates and expose them in.a non-overlapping manner on to the H2. In practice this is again labour intensive and consequently limiting to the complexity of an image that can be formed. A third embodiment of the current invention seeks to overcome the labour intensive nature of this process and allow for more complex, bright images to be produced.

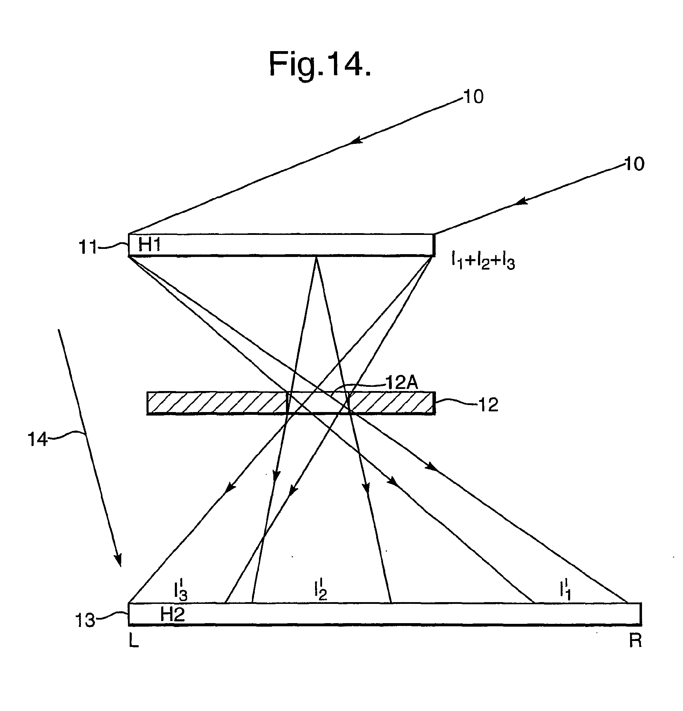

It has now been recognised that an aperture can be used to enable multiple images to be exposed simultaneously and in such a manner as to create a movement or animation effect. Figure 14 illustrates the third embodiment of the current invention whereby an aperture 12A in an aperature mask 12 is introduced between the H1 11 and an H2 13. The H1 11 is illuminated with a coherent conjugate beam 10 and exposed on to a H2 13 in the presence of a coherent reference beam 14 to form the final H2 master. The aperture 12A acts in essentially the same manner as for the second embodiment of the current invention by both restricting the image data and the area on to which said image data can be imaged. That is I'₃ can only contain image data that is viewable through the aperture 12A from the point labelled L. Likewise I'₁ can only contain image data that is viewable through the aperture from the point labelled R. For this example the resultant H2 13 will contain three areas of image data I'₁, I'₂ and I'₃ each of which will be viewable from a discrete viewing angle. As for the previous embodiments more complex artwork will allow for sophisticated animation and movement effects.

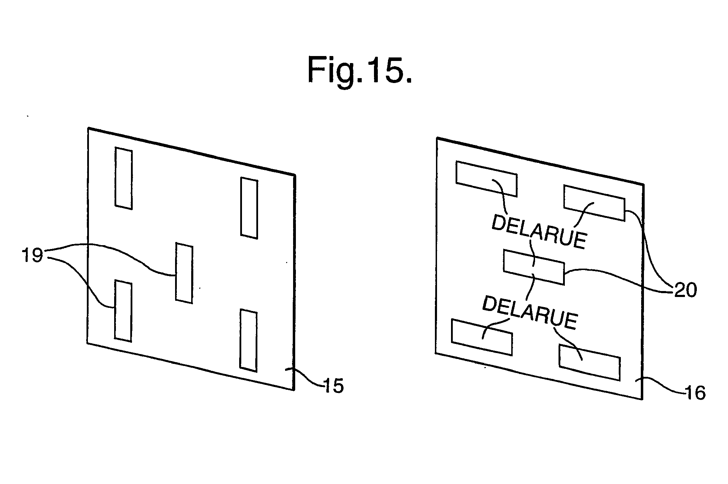

By way of further highlighting the benefits of the current inventions a number of further enhancements will now be highlighted. So far we have only discussed the possibility of creating a simple linear structure essentially comprising a single graphical element with a single movement effect. Several graphical elements may be combined in a single OVD. Figure 15 illustrates a simple example of an artwork mask 16 and apertures 15 that may used to create a device containing multiple graphical elements. Here each image element 20 within the artwork mask has an aperture 19 associated with it. The apertures are transverse to the image elements, e.g. aperture shortest dimension is transverse to the longest dimension of both artworks and Benton slits longest dimension. The completed device will have five image elements all having an associated kinetic motion effect. This can be quite simply achieved using a single exposure.

If the holographer wished they may use two or more exposures to create very visually striking effects where different elements have opposing movement effects. To achieve this the holographer would expose a first set of image elements according to embodiment one of the current invention via their associated apertures ensuring to mask those image elements and associated apertures he does not want exposed. The holographer would then make a second exposure according to the second embodiment of the current invention this time exposing those elements via their associated apertures not exposed during the first exposure and ensuring those elements already exposed and their associated apertures are masked off.

So far we have only considered introducing movement and animation effects which manifest themselves to the observer as a "band of light" of essentially constant colour which progressively moves through either a linear or curvilinear path which is supported by either a continuous region of holographic microstructure, whose spatial frequency and groove orientation is well defined at each point within the region and wherein both parameters vary continuously and progressively along the path described by the moving band of light, or by discontinuous regions of holographic microstructure (whose shape preferably describes a recognisable graphical feature) with the microstructures spatial frequency and orientation again defined within each region and progressively varying within each region along a path as described by the moving light band.

It should be appreciated that in all such cases the angularly selecting aperture will have it's shortest dimension transverse to the horizontal object artwork and therefore parallax axis e.g. the aperture will be transverse to the largest dimension of both the artwork sequence and the conventional Benton slit. Generally in such cases where the visible diffractive effect is a movement locus of constant colour the progressive changes in groove orientation will be the factor within the grating distribution.

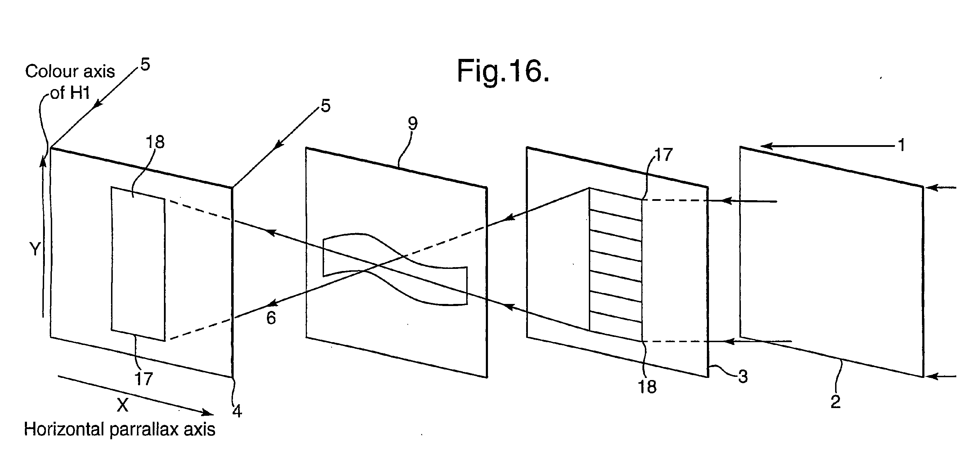

The inventors have also recognised that it is possible to use the current inventive method to generate smooth colour transitions. As will be appreciated by those skilled in the art, during the H1/H2 process movement effects are generated by varying an image elements position in the X direction H1 plane. As illustrated in Figure 16 a colour variation can be achieved by rotating the artwork sequence and aperture by 90° and recording the resulting combination into a H1 slit which is elongated along the colour axis and not the horizontal parallax axis as in the case of a Benton H1.

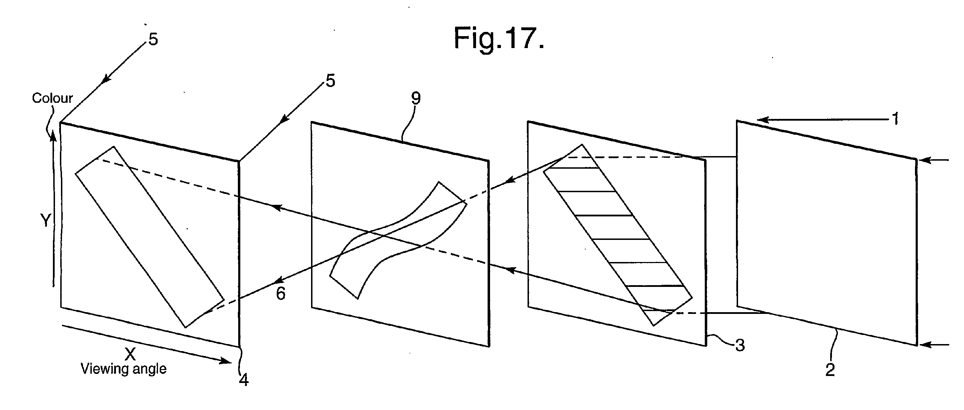

Effectively the pitch or spatial frequency of the diffraction gratings (cf Figures 4 and 6) varies progressively and continuously in the manner of a chirped grating. It therefore follows that if rather than rotate through 90°, the artwork mask and the aperture are rotated through 45° (in opposite senses) and the H1 slit orientated at 45° to the colour and parallax axes, a device could be manufactured with both a smooth movement or animation effect coupled with a smooth colour change effect. This further enhancement is illustrated in Figure 17. The angle and frequency of the diffraction grating structure now both vary continuously. This obviously presents the opportunity to develop highly complex and secure devices combining movement, animation, and colourshifts in a continuous, non-pixelated manner as well as introducing the 3D depth effect inherent within the H1/H2 process.

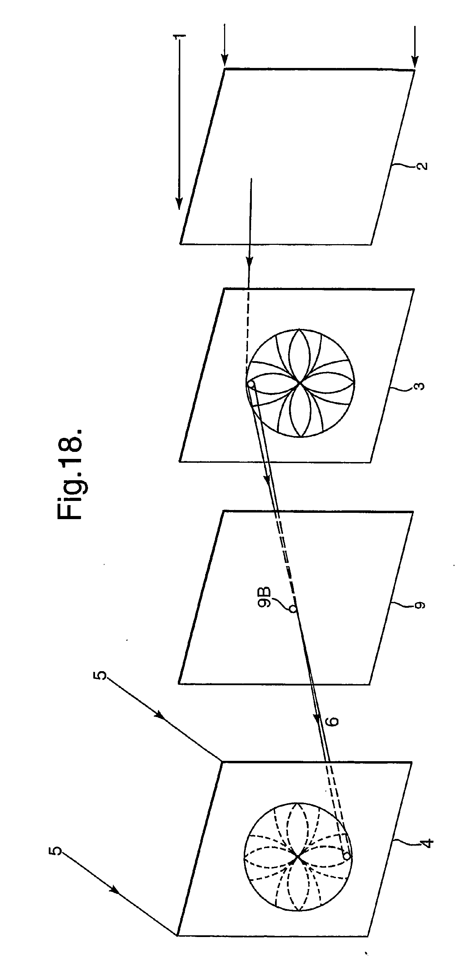

A further embodiment makes use of a pin hole aperture 9B rather than slit as previous illustrated. Figure 18 shows how a pin hole aperture 9B may be used in preference to a slit aperture to generate yet another novel effect. The resultant device recorded in the H1 4 will vary continuously across the whole of the XY plane to provide a very distinctive and highly secure image.

It should also be appreciated that the aperture need not be limited to either a slit or a pin hole, indeed it has been found that the aperture is preferably non-rectilinear in shape, for example having curved edges as shown in Figures 7 and 13. This helps hide the outline of the aperture in the final image. It has also been found that the outline of the aperture can also be disguised by providing a graded variation between opaque and transparent regions i.e. by providing a translucent region around the edges of the aperture. Having the aperture in between the diffuser 2 and the record medium 4 further helps disguise its presence during the origination process when viewing the final device.

## Claims

1. A method of recording an optically variable security device, the method comprising exposing an object (3) to a coherent beam of diffuse light; causing the resultant light to interfere with a reference beam (5) and recording the resultant interference pattern on or in a record medium (4) **characterised in that** an aperture mask (9) is located upstream or downstream of the object (3) with respect to the direction of the diffuse light beam such that different parts of the object (3) are imaged on to respective different, non-overlapping parts of the record medium (4).

2. A method according to claim 1, wherein the object comprises one of an artwork mask, three-dimensional model, or H1 holographic recording.

3. A method according to claim 2, wherein the artwork comprises a plurality of designs arranged so as to define a sequence of steps in a moving image.

4. A method according to claim 3, wherein each design is a character, successive designs in the sequence illustrating the character undergoing a movement action.

5. A method according to any of the preceding claims, wherein the aperture mask defines an elongate aperture.

6. A method according to claim 5, wherein the aperture extends substantially parallel with the object so that a movement effect is recorded in the record medium.

7. A method according to claim 5, wherein the aperture extends transverse to the object so that a colour variation with viewing direction is recorded in the record medium.

8. A method according to claim 7, wherein the aperture extends at an elongate angle to the object such that both a movement and colour variation with viewing direction or recorded in the record medium.

9. A method according to any of claims 1 to 4, wherein the aperture is a pin hole.

10. A method according to any of the preceding claims, wherein the aperture has at least one non-rectilinear edge.

11. A method according to any of the preceding claims, wherein a plurality of objects and corresponding apertures in the aperture mask are provided.

12. A method according to any of the preceding claims, wherein the record medium comprises a H1 recording, the method further comprising exposing the H1 recording to a coherent, diffuse, conjugate beam and causing interference between the conjugate beam after modulation by the H1 recording and a reference beam, and recording the resultant interference pattern as a H2 recording.

## Patentansprüche

1. Verfahren zum Aufzeichnen einer optisch variablen Sicherheitsvorrichtung, wobei das Verfahren aufweist das Aussetzen eines Objekts (3) einem kohärenten Strahl von diffusem Licht; Bewirken einer Interferenz des resultierenden Lichts mit einem Referenzstrahl (5) und Aufzeichnen des sich ergebenden interferierenden Musters auf oder in einem Aufzeichnungsmedium (4), **dadurch gekennzeichnet, daß** eine Öffnungsmaske (9) stromauf oder stromab des Objekts (3) in Bezug zu der Richtung des diffusen Lichtstrahls angeordnet ist, so daß unterschiedliche Teile des Objekts (3) abgebildet werden auf jeweiligen unterschiedlichen, nicht überlappenden Teilen des Aufzeichnungsmediums (4).

2. Verfahren nach Anspruch 1, worin das Objekt eine Graphikmaske, ein dreidimensionales Modell oder eine H1-holographische Aufzeichnung aufweist.

3. Verfahren nach Anspruch 2, worin die Graphik eine Vielzahl von Mustern aufweist, die so angeordnet sind, daß sie eine Folge von Schritten in einem bewegten Bild bilden.

4. Verfahren nach Anspruch 3, worin jedes Muster ein Zeichen ist, wobei aufeinanderfolgende Muster in der Sequenz das Zeichen darstellen, das eine Bewegungsaktion unternimmt.

5. Verfahren nach einem der vorangehenden Ansprüche, worin die Öffnungsmaske eine längliche Öffnung bildet.

6. Verfahren nach Anspruch 5, worin sich die Öffnung im wesentlichen parallel zu dem Objekt erstreckt, so daß ein Bewegungseffekt in dem Aufzeichnungsmedium aufgezeichnet wird.

7. Verfahren nach Anspruch 5, worin sich die Öffnung quer zu dem Objekt erstreckt, so daß eine Farbveränderung in der Betrachtungsrichtung in dem Aufzeichnungsmedium aufgezeichnet wird.

8. Verfahren nach Anspruch 7, worin sich die Öffnung in einem länglichen Winkel zu dem Objekt erstreckt, so daß sowohl eine Bewegungs- als auch eine Farbvariation in Betrachtungsrichtung in dem Aufzeichnungsmedium aufgezeichnet wird.

9. Verfahren nach einem der Ansprüche 1 bis 4, worin die Öffnung ein Stiftloch ist.

10. Verfahren nach einem der vorangehenden Ansprüche,
worin die Öffnung mindestens eine nicht geradlinige Kante aufweist.

11. Verfahren nach einem der vorhergehenden Ansprüche, worin eine Mehrzahl von Objekten und entsprechenden Öffnungen in der Öffnungsmaske vorgesehen sind.

12. Verfahren nach einem der vorhergehenden Ansprüche, worin das Aufzeichnungsmedium eine H1-Aufzeichnung aufweist, wobei das Verfahren weiterhin aufweist das Aussetzen der H1-Aufzeichnung einem kohärenten, diffusen, kontrollierten Strahl und Bewirken einer Interferenz zwischen dem konjugierten Strahl nach der Modulation durch die H1-Aufzeichnung und einem Referenzstrahl, und Aufzeichnen des sich ergebenden Interferenz-Musters als eine H2-Aufzeichnung.

## Revendications

1. Procédé d'enregistrement d'un dispositif de sécurité à variabilité optique, qui comprend les étapes qui consistent à :
exposer un objet (3) à un faisceau cohérent de lumière diffuse,
provoquer une interférence entre la lumière résultante et le faisceau de référence (5) et
enregistrer la structure de l'interférence qui en résulte sur ou dans un support d'enregistrement (4), **caractérisé en ce qu'**un masque (9) avec ouverture est situé en amont ou en aval de l'objet (3) en fonction de la direction du faisceau de lumière diffuse, de telle manière que l'image des différentes parties de l'objet (3) soit reproduite sur des parties respectives différentes et non superposées du support d'enregistrement.

2. Procédé selon la revendication 1, dans lequel l'objet comprend un masque artistique, un modèle tridimensionnel ou un enregistrement holographique H1.

3. Procédé selon la revendication 2, dans lequel la pièce artistique comprend plusieurs motifs disposés de manière à définir une séquence d'étapes dans une image en mouvement.

4. Procédé selon la revendication 3, dans lequel chaque modèle est un caractère, les modèles successifs de la séquence illustrant le caractère qui subit une action de mouvement.

5. Procédé selon l'une quelconque des revendications précédentes, dans lequel le masque à ouverture définit une ouverture allongée.

6. Procédé selon la revendication 5, dans lequel l'ouverture s'étend essentiellement parallèlement à l'objet de telle manière que l'effet du mouvement est enregistré sur le milieu d'enregistrement.

7. Procédé selon la revendication 5, dans lequel l'ouverture s'étend transversalement par rapport à l'objet de manière à ce qu'une variation de couleur en fonction des directions d'observation soit enregistrée dans le milieu d'enregistrement.

8. Procédé selon la revendication 7, dans lequel l'ouverture s'étend sous un angle allongé par rapport à l'objet de manière à ce qu'aussi bien les variations de couleur selon la direction d'observation que le mouvement soient enregistrées dans le support d'enregistrement.

9. Procédé selon l'une quelconque des revendications 1 à 4, dans lequel l'ouverture est une trou d'épingle.

10. Procédé selon l'une quelconque des revendications précédentes, dans lequel l'ouverture présente au moins un bord non rectiligne.

11. Procédé selon l'une quelconque des revendications précédentes, dans lequel de nombreux objets et les ouvertures correspondantes sont prévus dans le masque d'ouverture.

12. Procédé selon l'une quelconque des revendications précédentes, dans lequel le support d'enregistrement comprend un enregistrement H1 , le procédé comprenant de plus les étapes qui consistent à exposer l'enregistrement H1 à un faisceau cohérent, diffus et conjugué, à provoquer des interférences entre le faisceau conjugué après modulation par l'enregistrement H1 et un faisceau de référence, et à enregistrer comme enregistrement H2 le motif d'interférence qui en résulte.
